**Europäisches Patentamt**

**European Patent Office**

**Office européen des brevets**

(19)

(11) Veröffentlichungsnummer: **0 088 240**
**B1**

(12) **EUROPÄISCHE PATENTSCHRIFT**

(45) Veröffentlichungstag der Patentschrift:
06.11.85

(21) Anmeldenummer: 83101066.5

(22) Anmeldetag: 04.02.83

(51) Int. Cl.⁴: **A 01 F 15/00, A 01 F 15/02**

(54) Grossballenpresse.

(30) Priorität: 10.03.82 DE 3208645

(43) Veröffentlichungstag der Anmeldung:
14.09.83 Patentblatt 83/37

(45) Bekanntmachung des Hinweises auf die Patenterteilung:
06.11.85 Patentblatt 85/45

(84) Benannte Vertragsstaaten:
AT BE CH DE FR GB IT LI NL

(56) Entgegenhaltungen:
DE - A - 2 647 472
DE - A - 2 653 318
DE - A - 2 740 292
DE - A - 2 740 339
DE - B - 1 782 821

(73) Patentinhaber: Klöckner-Humboldt-Deutz AG
Zweigniederlassung Fahr, D-7702 Gottmadingen (DE)

(72) Erfinder: Schaible, Siegfried, Dipl.-Ing.,
Breslauerstrasse 15, D-7700 Singen/Htwl. (DE)

(74) Vertreter: Haft, Berngruber, Czybulka,
Hans-Sachs-Strasse 5, D-8000 München 5 (DE)

## Beschreibung

Die Erfindung betrifft eine Grossballenpresse für geschnittenes Halmgut mit einer aufklappbaren Presskammer, die mit einer Einlassöffnung zur Zufuhr des Halmgutes versehen ist, und die durch Aufklappen eines Teils der Presskammer eine Auslassöffnung für den fertigen Ballen bildet, mit einer Aufnahmevorrichtung für das geschnittene Halmgut, mit einer Fördertrommel, deren Breite der Länge des zu formenden Ballens entspricht, zwischen der Aufnahmevorrichtung und der Einlassöffnung und mit einer Bindevorrichtung für den Ballen, die aus mehreren oberhalb der Einlassöffnung angeordneten Knüpfapparaten mit Garnvorratsrollen besteht, denen jeweils eine schwenkbare Nadel und eine bewegliche Garnführung zugeordnet sind, wobei die Garnführungen Schlitze in der Presskammer durchsetzen.

Grossballenpressen finden aufgrund ihrer grossen Flächenleistung von mehreren Hektar pro Stunde, wodurch auch kurze Schönwetterzeiten genutzt werden können, immer weitere Verbreitung. Die meisten derartigen Pressen sind Rollballenpressen, wie sie z.B. in der DE-A Nr. 2740339 der Anmelderin beschrieben sind. Dabei wird das von einer Aufnahmevorrichtung dem Pressraum zugeführte Halmgut durch am Umfang der Presskammer angeordnete Presswalzen zu einem runden Ballen geformt, der stark ineinander verfilzt ist und wobei die einzelnen Halme miteinander verflochten werden. Derartige Rollballenpressen sind aufgrund der in der Presskammer angeordneten Presswalzen und deren Antrieb durch Kraftumlenkgetriebe und die dazugehörige Mechanik umständlich und kompliziert im Aufbau. Ferner erzeugen sie üblicherweise nur Rundballen, die in Hanglagen unerwünscht sind und die aufgrund der starken Verfilzung schwer aufzulösen sind.

Eine andere Art von Grossballenpresse ist in der DE-A Nr. 2740292 der Anmelderin beschrieben. Diese Grossballenpresse weist einen Pressraum auf mit einer Einlassöffnung und einer durch Verschwenkung eines Teils des Pressraumes gebildeten Auslassöffnung sowie einer Betätigungseinrichtung zum Verschwenken der beweglichen Gehäusehälfte, die zur Pressung des Erntegutes zu einem Ballen teilweise über die feststehende Gehäusehälfte in überlappender Weise mittels einer hydraulischen oder mechanischen, vom Schlepper betätigten Mechanik verschwenkbar ist. Damit werden einerseits leicht auflösbare, gepresste, also nicht gewickelte Ballen erzeugt, die aufgrund der Überlappung der beiden Gehäuseteile einen ovalen Querschnitt aufweisen, und die nur schwer rollbar sind. Zwar entfallen hierbei Förderelemente am Umfang des Pressraumes und deren Antriebsmechanismus, jedoch ist noch eine hydraulische oder mechanische Kraftübertragung zur Ausführung des Pressvorgangs erforderlich.

Aus der DE-B Nr. 1782821 ist eine Grossballenpresse für geschnittenes Halmgut mit einer aufklappbaren Presskammer bekannt, die eine Einlassöffnung zur Zufuhr des Halmguts aufweist und die durch Aufklappen eines Teils der Presskammer eine Auslassöffnung für den fertigen Ballen bildet. Ferner ist eine Aufnahmevorrichtung für das geschnittene Halmgut vorgesehen sowie eine Fördertrommel zwischen der Aufnahmevorrichtung der Auslassöffnung und eine Bindevorrichtung für den Ballen, die aus mehreren oberhalb der Einlassöffnung angeordneten Knüpfapparaten mit Garnvorratsrollen besteht, denen jeweils eine schwenkbare Nadel und eine bewegliche Garnführung zugeordnet sind, wobei die Garnführungen Schlitze in der Presskammer durchsetzen. Diese Grossballenpresse zur Ausbildung von Rechteckballen weist noch eine Verdichterplatte auf, die sowohl eine Hin- und Herbewegung als auch einen Hub ausführen muss, wozu sie mit Verbindungslenkern verbunden ist, die wiederum an Lenkern angelenkt sind. Ferner trägt die Verdichterplatte starre Arme, die mit weiteren an der Oberseite des Laderaums verbundenen Armen verbunden sind, so dass eine Parallelogrammführung entsteht, die zur Verdichtung des Ballens erforderlich ist. Die Verdichterplatte ist ferner von einer Bindegarnführung durchsetzt, wobei diese Führungen zusätzlich noch mit tunnelförmigen Bahnen versehen sein müssen, um ein Durchscheuern der Bindegarnstränge durch die Hin- und Herbewegung der Verdichterplatte zu verhindern. Die Garnführungen selbst sind starr und unbeweglich angeordnet.

Aufgabe der vorliegenden Erfindung ist es, eine Grossballenpresse noch einfacher auszugestalten und damit wirtschaftlicher herzustellen, sowie ihre Betriebssicherheit zu erhöhen.

Ausgehend von einer Grossballenpresse der eingangs näher genannten Art erfolgt die Lösung dieser Aufgabe mit den im kennzeichnenden Teil des Anspruchs 1 angegebenen Merkmalen; vorteilhafte Ausgestaltungen sind in den Unteransprüchen beschrieben.

Mit der erfindungsgemässen Ballenpresse wird eine sehr hohe Verdichtung erreicht. Damit entfällt der mechanische Pressvorgang durch Überlappen des einen Presskammerteils über das andere, wodurch auch die hydraulischen oder mechanischen Pressorgane entfallen können, so dass der technische Aufwand erheblich niedriger liegt.

Da die Garnführungsorgane derart mit dem aufklappbaren Teil der Presskammer verbunden sind, dass sie durch deren Schwenkbewegung betätigbar sind, werden sie beim Öffnen der Rückwand zum Knüpfapparat hin verschwenkt, während beim Schliessen der Rückwand die Garnführungsorgane die Garnstränge erfassen, in die Ausgangslage zurückschwenken und die Schlitze durchsetzen.

Werden die Garnführungsorgane zusätzlich von je einer Feder beaufschlagt, so ist eine zusätzliche Verdichtung des Ballenkerns zu erzielen, so dass eine grössere Futtermenge pro Ballen enthalten ist.

Besonders vorteilhaft ist es, dass die Presskammer in ihrer Gesamtheit um eine quer zur Fahrtrichtung liegende waagrechte Achse kippbar angeordnet ist. Dieses in Längsrichtung der Grossballenpresse, aber entgegengesetzt zur Fahrtrichtung erfolgende Abkippen der gesamten Presskammer um einen relativ kleinen Winkel ermöglicht die problemlose Zufuhr der Nadel zum Knüpfapparat, um so die um den fertiggebundenen Ballen angeordneten Garne zu verknüpfen.

Die erfindungsgemässe Grossballenpresse ist mit erheblich geringerem technischen Aufwand herstellbar als die bekannten Grossballenpressen, wobei die Leistung wesentlich höher als die der herkömmlichen Maschinen ist. Zum Binden gibt es, im Gegensatz zur spiralförmigen Bindeweise, nur kurze Stillstandszeiten der Maschine. Ferner können auch breitere Aufnahmevorrichtungen als bisher verwendet werden, da die zusätzliche Fördertrommel das Futter sehr aktiv an der Aufnahmevorrichtung abnimmt und unter kräftigem Druck in die Presskammer befördert.

Im folgenden wird die Erfindung anhand der Zeichnung näher erläutert, in der vorteilhafte Ausführungsformen dargestellt sind.

Es zeigen:

Fig. 1 eine schematische Seitenansicht einer erfindungsgemässen Grossballenpresse mit zylindrischer Presskammer vor Beginn des Füllvorgangs

Fig. 2 dieselbe Grossballenpresse nach der Füllung der Presskammer

Fig. 3 die Grossballenpresse in der Stellung, in der der Knoten ausgebildet wird

Fig. 4 dieselbe Grossballenpresse beim Auswerfen des fertigen Ballens

Fig. 5 die schematische Seitenansicht eines anderen Ausführungsbeispiels der erfindungsgemässen Grossballenpresse mit zylindrischer Presskammer vor dem Füllvorgang

Fig. 6 die Seitenansicht dieser Grossballenpresse nach Ausbildung des Ballens

Fig. 7 eine Seitenansicht dieser Grossballenpresse mit abgekippter Presskammer zur Ausbildung des Knotens

Fig. 8 eine Seitenansicht dieser Grossballenpresse beim Auswerfen des Ballens

Fig. 9 eine schematische Seitenansicht eines anderen Ausführungsbeispiels einer erfindungsgemässen Grossballenpresse mit rechteckiger Presskammer vor dem Füllvorgang

Fig. 10 eine Seitenansicht dieses Ausführungsbeispiels nach dem Füllvorgang

Fig. 11 eine Seitenansicht dieses Ausführungsbeispiels in der abgekippten Stellung zur Ausbildung der Knoten

Fig. 12 eine Seitenansicht dieses Ausführungsbeispiels beim Auswerfen des fertigen rechteckigen Ballens

Fig. 13 eine schematische Seitenansicht eines weiteren Ausführungsbeispiels der erfindungsgemässen Grossballenpresse, wobei der Ballen in Hochstellung gebildet wird

Fig. 14 eine Seitenansicht dieses Ausführungsbeispiels bei der Ausbildung der Knoten, und

Fig. 15 eine Seitenansicht dieses Ausführungsbeispiels beim Auswerfen des fertigen Ballens.

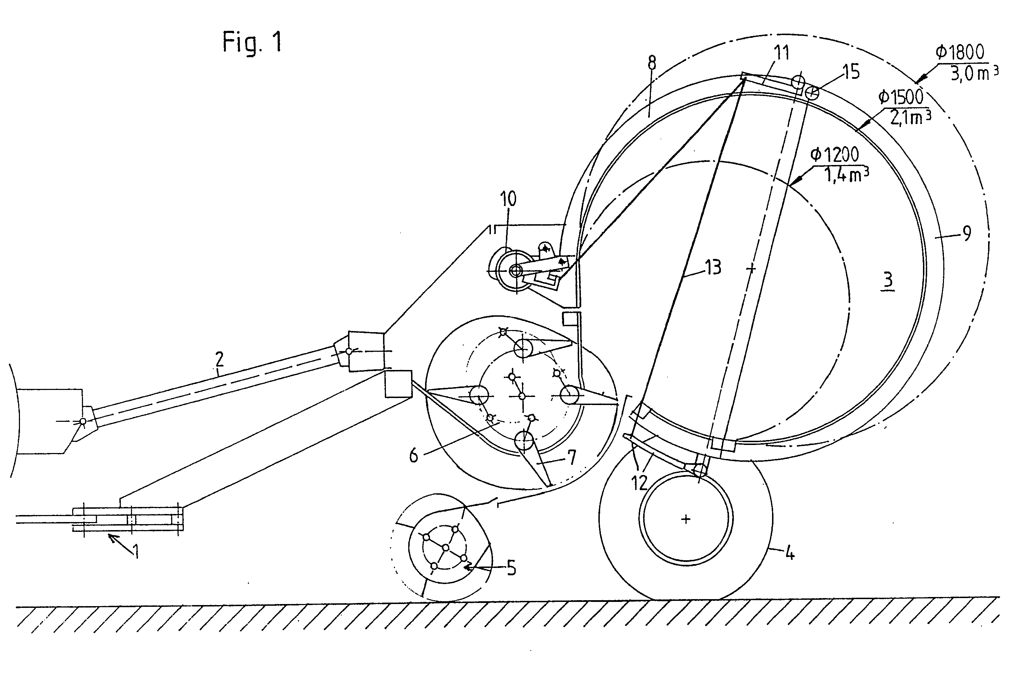

Bei der in Fig. 1 schematisch dargestellten Grossballenpresse ist mit 1 die Anhängevorrichtung bezeichnet, mit der diese an einen nicht dargestellten Traktor angehängt wird. Mit 2 ist die Kardanwelle bezeichnet zur Übertragung der Kraft von der Zapfwelle des Traktors auf die Grossballenpresse. Diese bewegt sich auf ihrem Laufrad 4 in Richtung des Pfeiles A, wobei die Aufnahmevorrichtung 5 das geschnittene Halmgut aufnimmt und einer Fördertrommel 6 zuführt. Die Fördertrommel 6 ist mit Förderzinken 7 versehen und kann auch zusätzlich eine nicht dargestellte Schneideeinrichtung aufweisen, die mit den Förderzinken 7 derart zusammenwirkt, dass das langstenglige Halmgut geschnitten wird, um so eine dichtere Füllung der Presskammer zu erzielen.

Die Presskammer 3 besteht aus zwei Gehäusehälften 8, 9, wobei die eine Hälfte 8 feststehend ist und die zweite Hälfte 9 um die Schwenkachse 15 hochgeklappt werden kann, damit der fertige Ballen die Presskammer verlassen kann. Mit 10 ist ein Knüpfapparat samt Vorratsrolle bezeichnet, von dem aus das Garn 13 über die verschwenkbare Garnführung 11 zur ebenfalls verschwenkbaren Nadel 12 läuft. Mit 14 ist die Einlassöffnung bezeichnet durch die das aufgenommene und gegebenenfalls geschnittene Halmgut in die Presskammer 3 gelangt.

Wie aus Fig. 1 ferner ersichtlich ist, weist bei diesem Ausführungsbeispiel die Presskammer 3 einen kreisförmigen Querschnitt auf; sie ist leicht abnehmbar, so dass verschiedene Grössen verwendbar sind, wobei z.B. ein Ballen 16 mit einem Durchmesser von etwa 1,2 m und einem Rauminhalt von 1,4 m³ geschaffen werden kann, oder ein solcher mit einem Durchmesser von 1,5 m und einem Rauminhalt von 2,1 m³ oder ein solcher mit einem Durchmesser von 1,8 m und einem Rauminhalt von 3,0 m³.

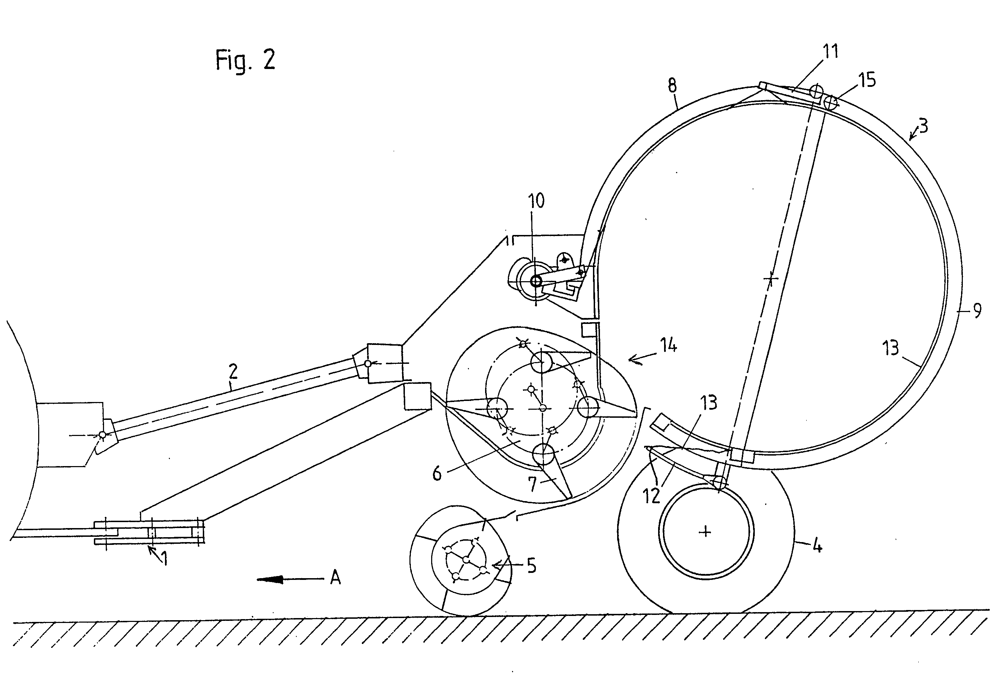

Fig. 1 zeigt den Zeitpunkt zu dem die Grossballenpresse bereit zur Aufnahme von Halmgut ist. Das Garn eines jeden Knüpfapparates, von dem z.B. vier bis fünf nebeneinander angeordnet sind, wird über die Garnführung 11 zur schwenkbaren Nadel 12 geführt und dort befestigt. Wird die Grossballenpresse nun in Bewegung gesetzt, so füllt sich die Presskammer 3 langsam mit dem geschnittenen Halmgut, wobei sich die vier bis fünf parallel zueinander verlaufenden Garnteile 13 durch den Futterdruck um den Ballen legen, und dessen hintere Hälfte umschliessen, wie es in Fig. 2 dargestellt ist.

Die Fördertrommel 6 ist auf die Breite des fertigen Ballens 16 abgestimmt und zwischen der Aufnahmevorrichtung 5 sowie der Einlassöffnung 14 angeordnet. Sie stopft das Futter in die Presskammer 3, wobei eine sehr hohe Verdichtung erreicht werden kann. Das Zusammenwirken mit einer Schneidvorrichtung ist dann besonders vorteilhaft, wenn eine besonders hohe Verdichtung erzielt werden soll. Ausserdem ist ein Ballen aus kurzgeschnittenem Futter leichter aufzulösen.

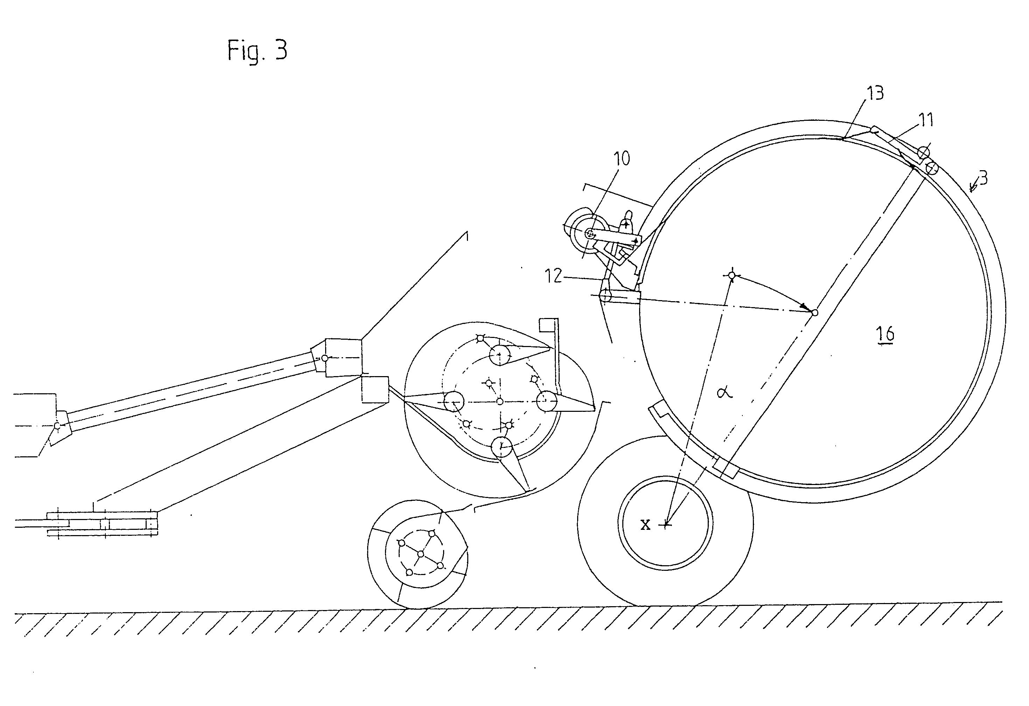

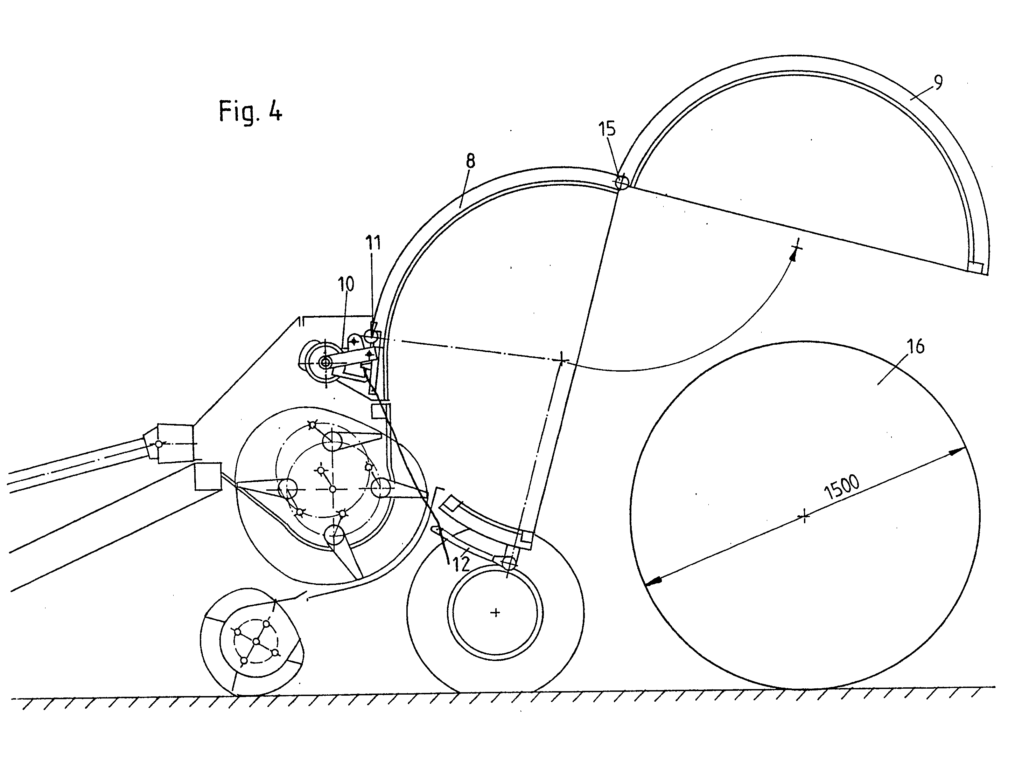

Nachdem die Presskammer 3 mit dem Futter gefüllt ist und sich das Garn 13 um die rückwärtige Hälfte des Ballens gelegt hat, wird die Presskammer 3 um einen Winkel α nach hinten gekippt, wie es in Fig. 3 dargestellt ist. Gleichzeitig bewegen sich die einzelnen Nadeln 12 zu dem zugehörigen Knüpfapparat 10, der automatisch einen Knoten bildet und das Garn von der Vorratsrolle trennt. Damit ist der Ballen 16 mit der Anzahl der Knüpfapparate und der zugehörigen Nadeln entsprechenden, parallel zueinander verlaufenden Garnringen umgeben, so dass er nunmehr ausgeworfen werden kann, wie es in Fig. 4 dargestellt ist. Zu diesem Zweck verschwenkt die hintere Hälfte 9 der Presskammer 3 um die Schwenkachse 15 gegenüber dem feststehenden Teil 8 und bildet so eine Auslassöffnung, die gross genug ist, um den fertigen Ballen 16 nach hinten abrollen zu lassen.

Durch das Öffnen des rückwärtigen Teils 9 der Presskammer 3 wird die Garnführung 11 zum Knüpfapparat 10 hin verschwenkt und erfasst erneut das Garn 13. Wird nach dem Auswerfen des fertigen Ballens 16 der rückwärtige Teil 9 wieder geschlossen, so schwenkt die Garnführung 11 in ihre Ausgangslage zurück, ebenso wie die Nadel 12, die ebenfalls das Garn 13 ergriffen hat und in ihre Ausgangsstellung zurück verschwenkt wird.

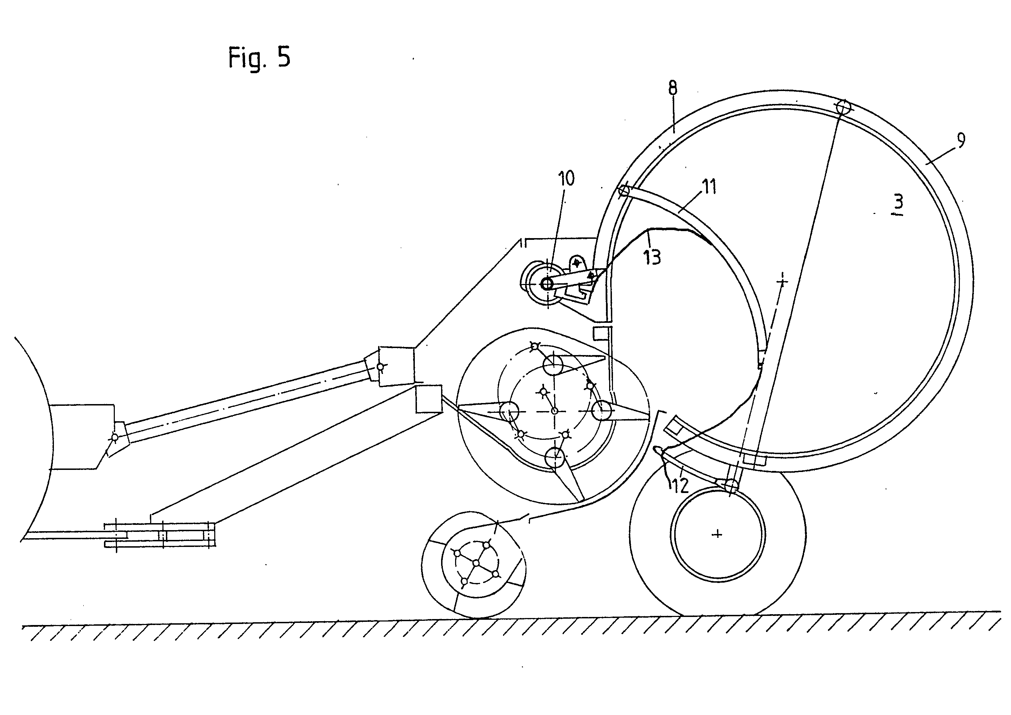

Bei dem in den Fig. 1 bis 4 dargestellten Ausführungsbeispiel ist jeweils das Oberteil der Presskammer 3 an den Stellen geschlitzt, an denen die Garnführungen 11 angeordnet sind, so dass die Garne den Innenraum der Presskammer 3 frei durchsetzen können. Bei dem in den Fig. 5 bis 8 dargestellten Ausführungsbeispiel wird ebenfalls eine Presskammer 3 mit kreisförmigem Querschnitt verwendet. Dabei wird jedoch eine etwas andere Art der Garnführung 11 verwendet, um das Garn 13 um den zu pressenden Ballen zu legen. Die am nicht verschwenkbaren Teil 8 der Presskammer 3 angeordnete verschwenkbare Garnführung 11 schwenkt durch den Innenraum der Presskammer 3 und erfasst das Garn 13. Durch den Druck des zugeführten Futters oder durch die sich schliessende Rückwand 9 legt sich die Garnführung 11 und damit das Garn 13 an die Aussenkontur des Ballens an. Dabei werden die Garnstränge 13 zusätzlich während des Füllvorgangs der Presskammer 3 geführt, so dass sie sich im richtigen Abstand um den Ballen 16 legen.

Bei diesem Ausführungsbeispiel ist es auch möglich, die Garnführung 11 zusätzlich durch den Druck einer nicht dargestellten Feder zu beaufschlagen, so dass eine noch höhere Verdichtung, insbesondere des Kerns des Ballens, erzielt wird.

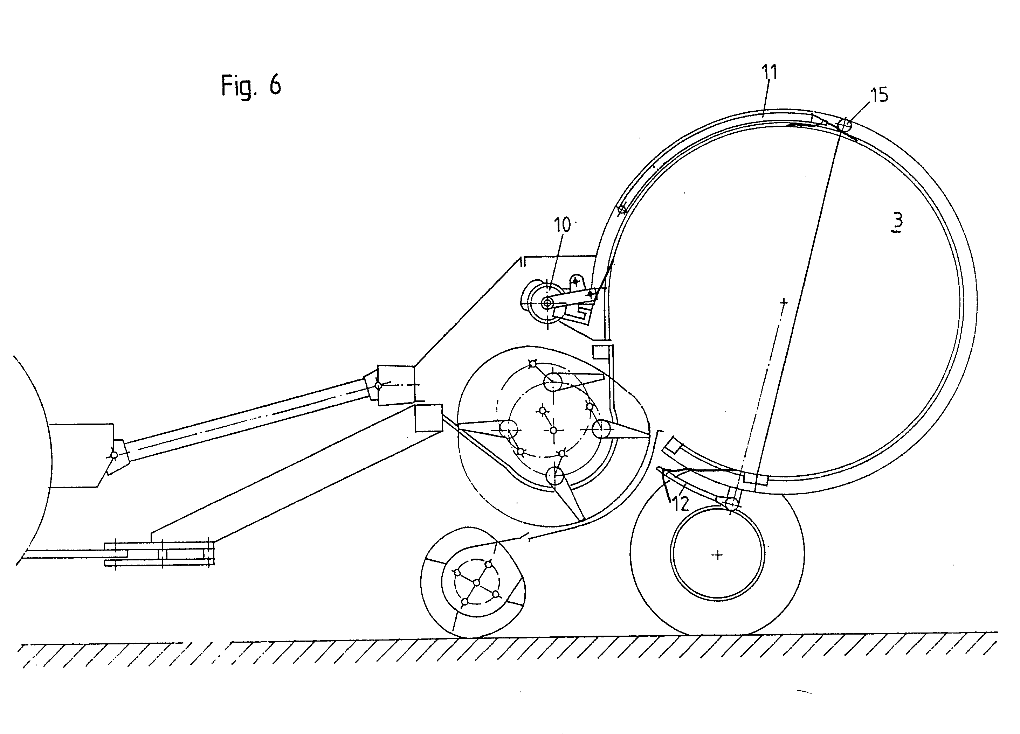

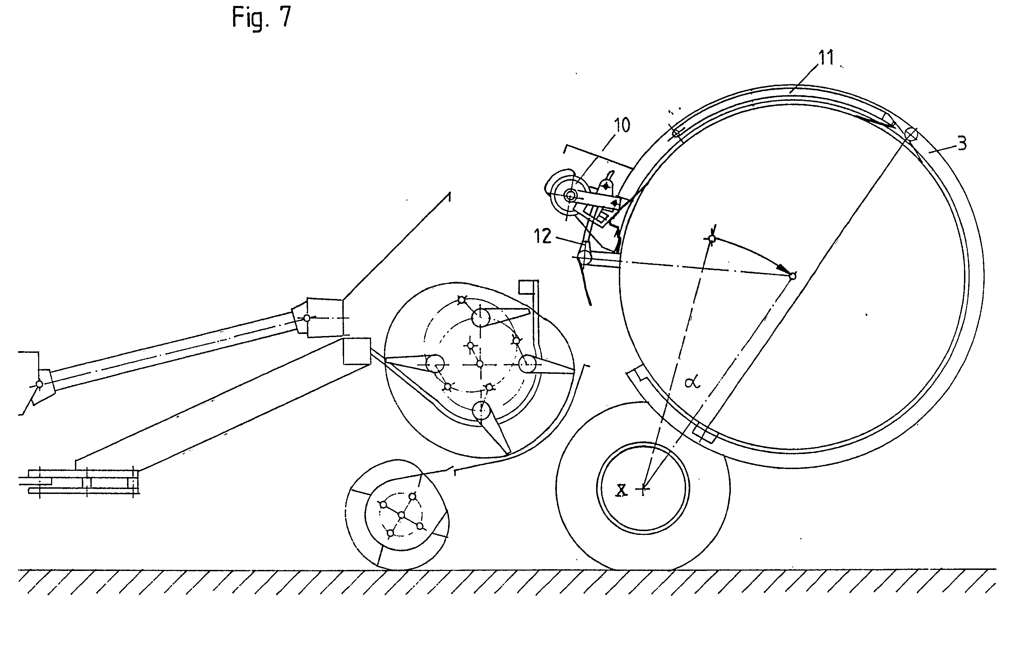

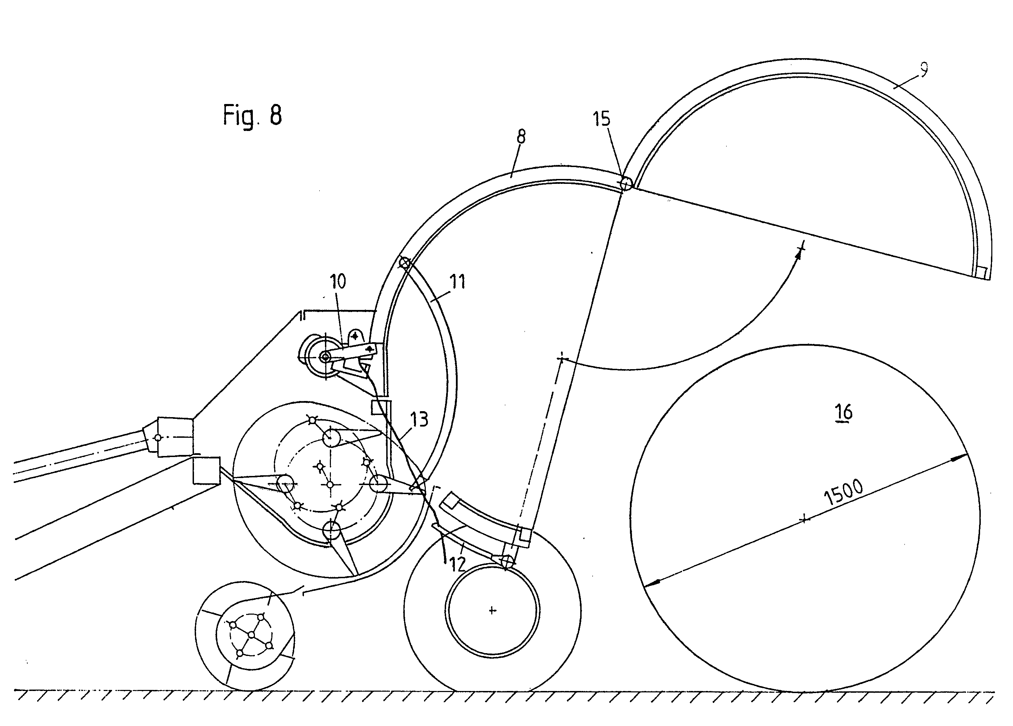

Fig. 5 zeigt wieder den Zustand vor dem Füllvorgang der Presskammer 3. Unterhalb der Presskammer ist wieder eine verschwenkbare Nadel 12 angeordnet, die ebenfalls den Garnstrang 13 erfasst. Fig. 6 zeigt den Zustand in dem die Presskammer 3 gefüllt ist. Die Garnführung 11 ist nach oben verschwenkt und der Garnstrang 13 für jede Führung 11 und für jeden Knüpfapparat 10 hat sich um den hinteren Teil des Ballens gelegt. Hierbei erfolgt nun, wie Fig. 7 zeigt, eine Verschwenkung der Presskammer 3 um einen Winkel α nach hinten, wodurch die Nadel 12 mit dem Garnstrang zum Knüpfapparat 10 geführt wird und dort automatisch einen Knoten bildet, wonach der Garnstrang 13 von der Vorratsrolle abgetrennt wird. Gemäss Fig. 8 wird anschliessend der hintere Teil 9 der Presskammer 3 um die obere Schwenkachse 15 nach oben verschwenkt, so dass der fertige Ballen 16 die Grossballenpresse verlassen kann. Durch diese Betätigung wird die Garnführung 11 wieder durch den Innenraum der Presskammer 3 nach unten verschwenkt und ergreift einen neuen Garnstrang 13, der ebenfalls von der nach unten verschwenkten Nadel 12 ergriffen worden ist.

Das Verschwenken der Presskammer 3 nach hinten ist vorteilhaft, damit die Nadel 12 das Garn 13 ungestört zum Knüpfapparat 10 führen kann. Es ist auch möglich, ohne Verschwenken der Presskammer auszukommen, wobei sich dann die Nadeln 12 im Schutz der Förderzinken 7 durch die Fördertrommel 6 bewegen müssen. In diesem Fall jedoch müsste die Fördertrommel 6 leer mitlaufen.

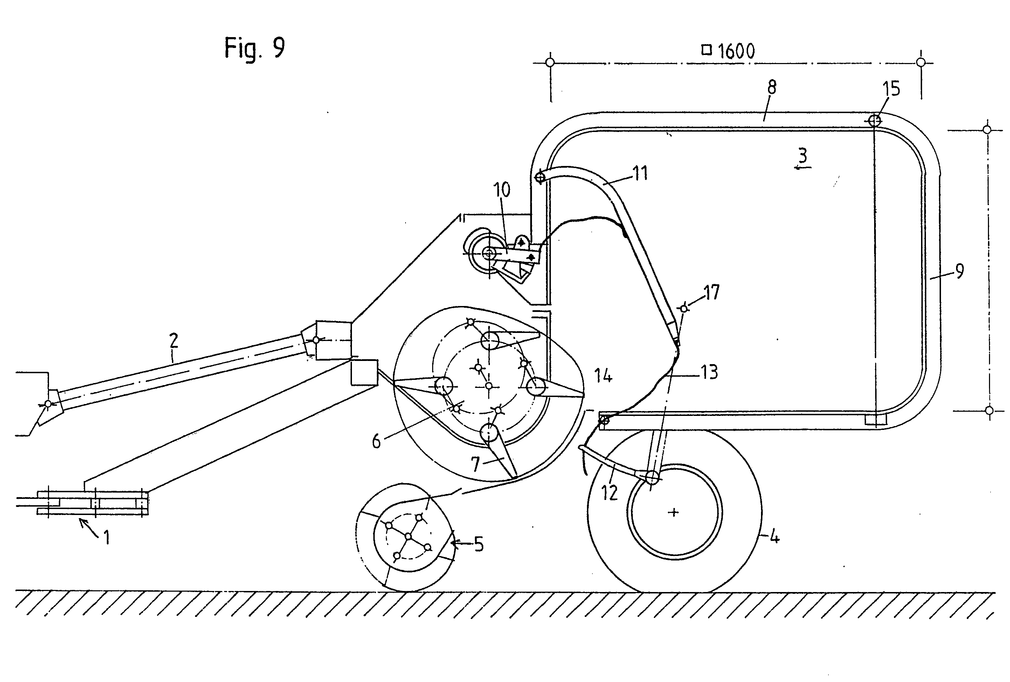

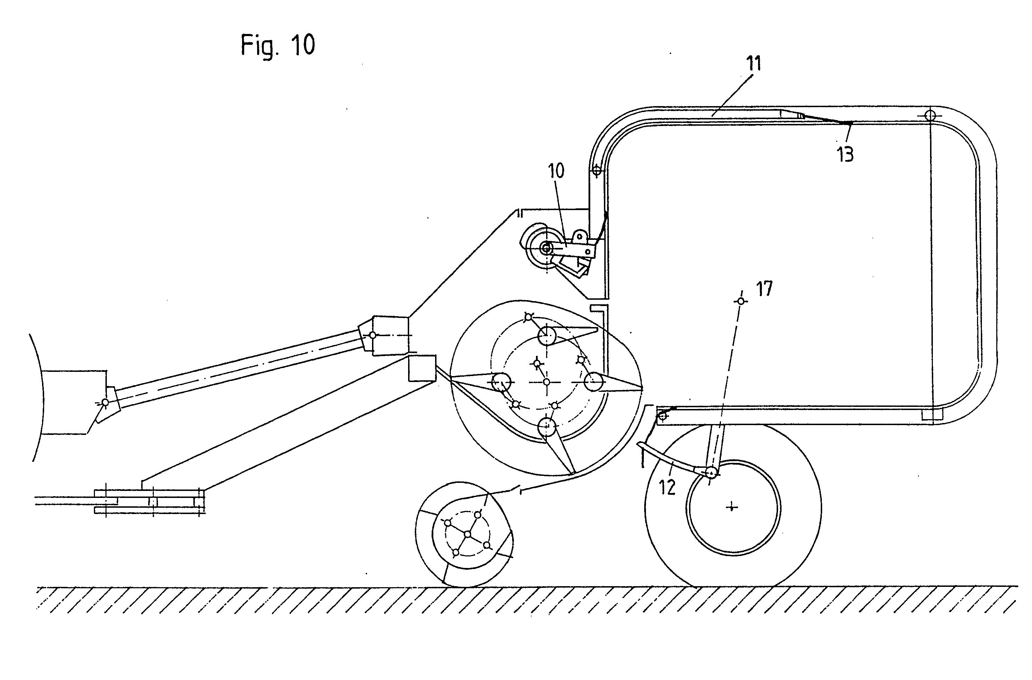

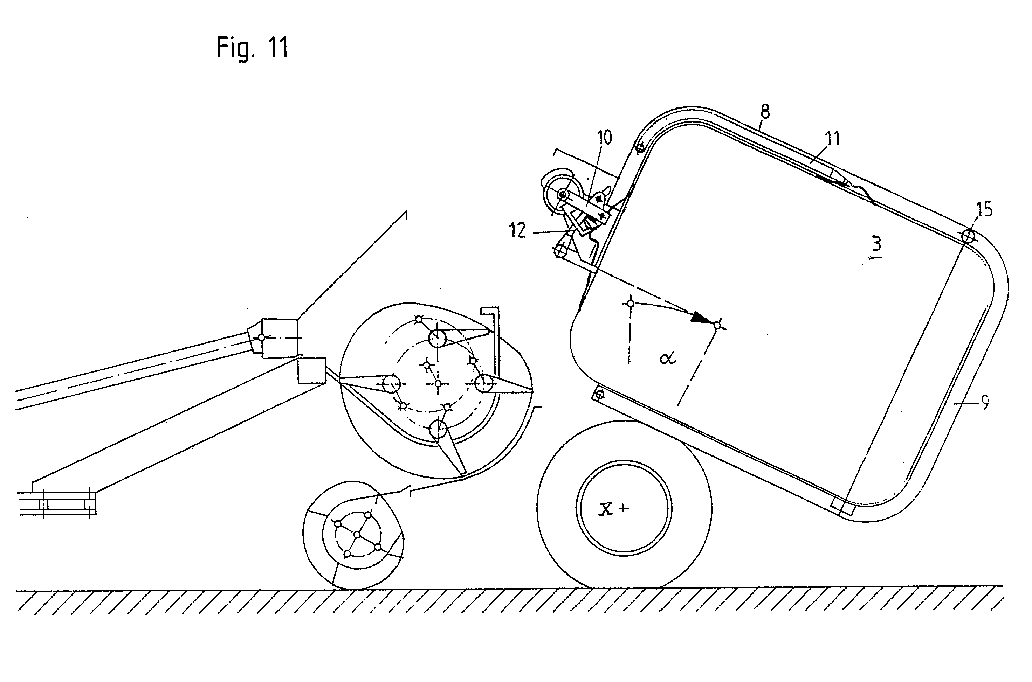

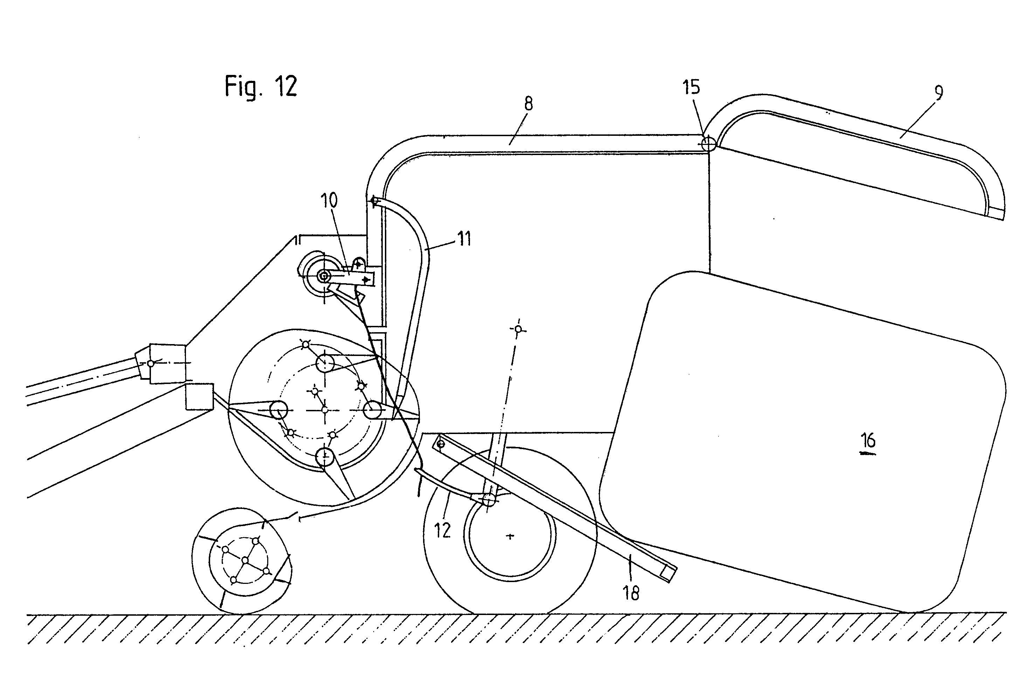

In den Fig. 9 bis 12 ist ein Ausführungsbeispiel einer erfindungsgemässen Grossballenpresse dargestellt, bei dem eine rechteckige Presskammer 3 Verwendung findet. Auch hier sind sonst gleiche Teile mit gleichen Bezugszeichen versehen, insbesondere die sich durch den Innenraum verschwenkende Garnführung 11 und die verschwenkbare Nadel 12 mit ihrem Drehpunkt 17. Nach dem Füllen der Presskammer, wie es in Fig. 10 dargestellt ist, ist die Garnführung 11 nach oben verschwenkt, während das Garn 13 an der Aussenkontur des Ballens anliegt. Durch Verschwenken der Presskammer 3 nach hinten, wie es in Fig. 11 angedeutet ist, um einen Winkel α wird wieder die Nadel 12 zum Knüpfapparat 10 geführt, wonach der Knoten gebildet wird und das Garn von der Vorratsrolle abgetrennt wird. Durch Hochklappen des hinteren Teils 9 der Presskammer 3 um die waagrechte Schwenkachse 15 wird der Ballen 16 ausgeworfen, wobei eine zusätzlich vorgesehene Gleitschiene 18 ein sanfteres Ablegen auf den Boden gewährleisten kann. Die Garnführung 12 senkt sich wieder durch den Innenraum der Presskammer 3 nach unten und ergreift einen neuen Garnstrang, der bereits von der Nadel 12 ausgezogen worden ist.

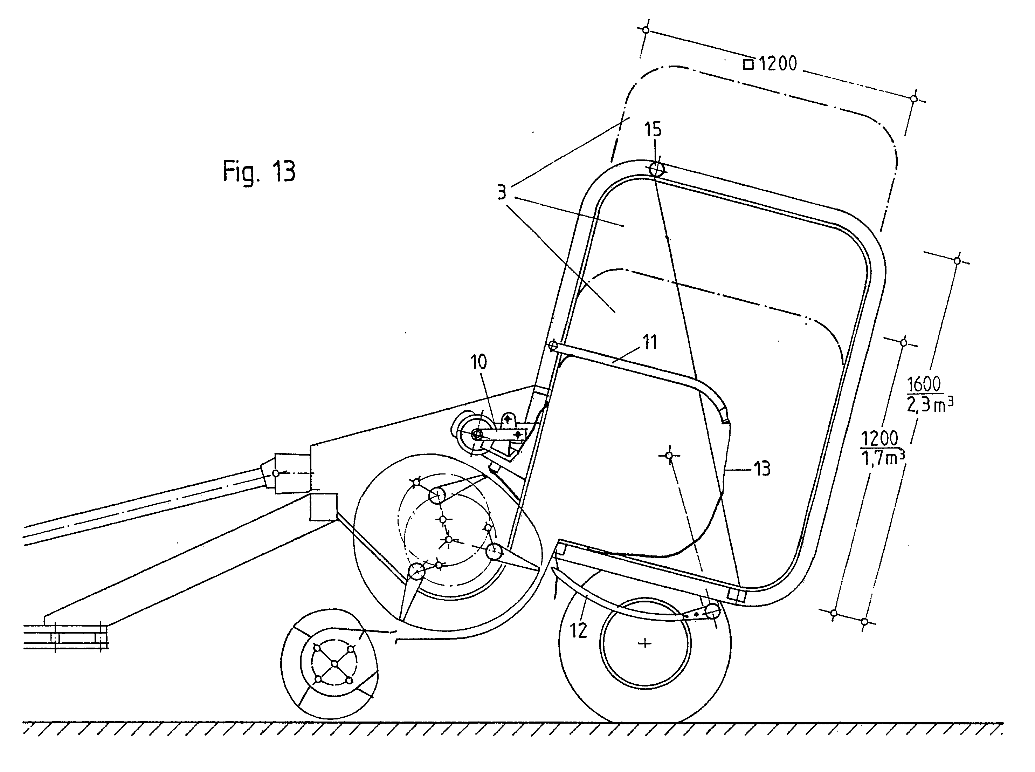

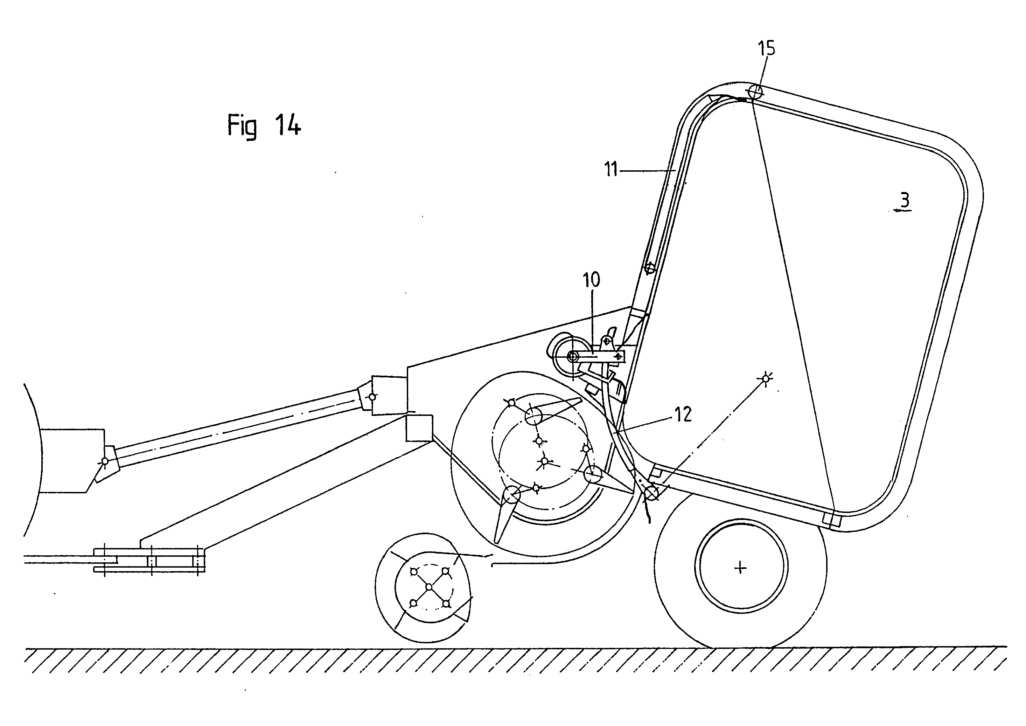

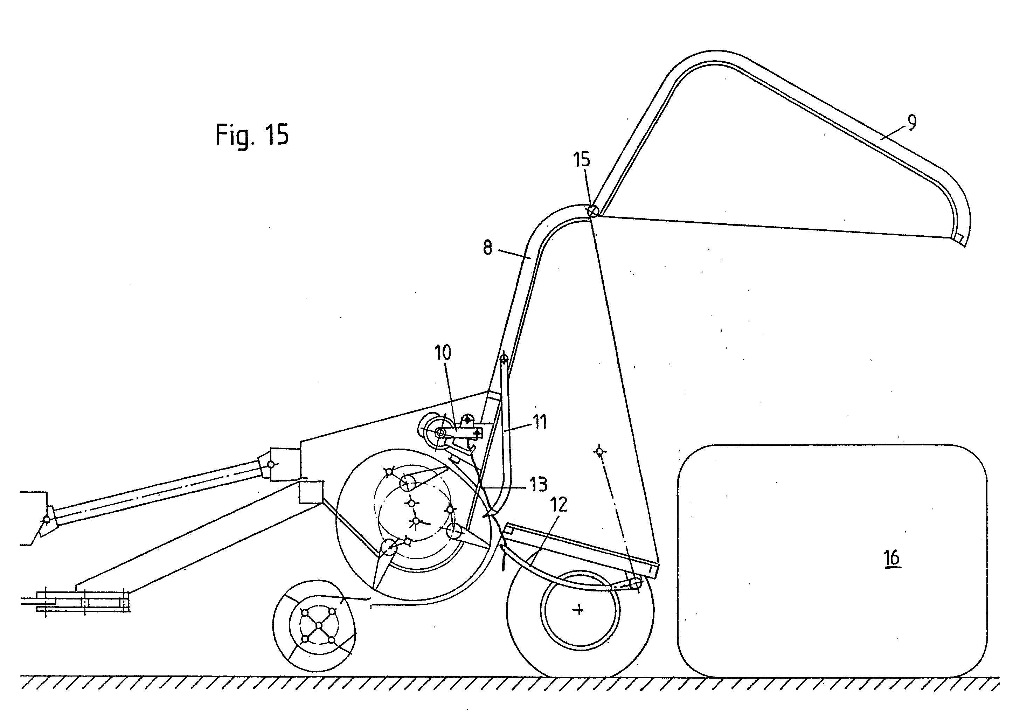

Bei dem in den Fig. 13 bis 15 dargestellten Ausführungsbeispiel wird ein rechteckiger Ballen 16 in Hochstellung gebildet. Anstelle von rechteckigen Ballen können auch würfelförmige Ballen geformt werden. Bei diesem Ausführungsbeispiel bringt die Nadel 12 das Garn 13 im Schutz der leerlaufenden Fördertrommel 6 zum Knüpfapparat 10. Wie insbesondere Fig. 13 erkennen lässt, können wieder verschiedene Grössen von Presskammern eingesetzt werden. Vorteilhafte Grössen sind dabei eine Höhe von 1,2 m für einen Rauminhalt von 1,7 m³ oder eine Höhe von 1,6 m für einen Rauminhalt von 2,3 m³ oder eine Höhe von 2,1 m für einen Rauminhalt von 3,0 m³.

Das Verschwenken der Presskammer 3 kann bei diesem Ausführungsbeispiel entfallen, da die Presskammer von vornherein unter einem Winkel zur Horizontalen angeordnet ist. Die für die Garnführung notwendige Nadel 12 ist entsprechend lang ausgeführt und erreicht den Knüpfapparat 10 durch die leerlaufende Fördertrommel 6.

Die erfindungsgemässe Grossballenpresse weist einen erheblich geringeren technischen Aufwand als die bisher verwendeten Grossballenpressen auf und damit auch wirtschaftlicher herstellbar. Sie ist für alle Futterarten einsetzbar und benötigt im Gegensatz zu spiralförmigen Bindevorrichtungen nur sehr geringe Stillstandszeiten, um den Ballen fertigzubinden. Durch Vorsehen von 4 bis 5 Knüpfapparaten mit zugehörigen Garnführungen wird eine feste Bindung des fertigen Ballens gewährleistet, der insbesondere wenn er würfelförmig ausgeführt ist, einen vorhandenen Stapelraum besonders gut ausnutzt.

Die bisher verwendeten Aufnahmevorrichtungen 5 für das geschnittene Futter mussten in etwa der Presskammerbreite entsprechen. Bei der erfindungsgemässen Grossballenpresse kann auch eine weitere Aufnahmevorrichtung eingesetzt werden, da die zusätzlich vorgesehene Fördertrommel 6 das Futter wirksam an der Aufnahmevorrichtung abnimmt und in die Presskammer stopft.

1　Anhängevorrichtung
2　Kardanwelle
3　Presskammer
4　Laufrad
5　Aufnahmevorrichtung
6　Fördertrommel
7　Förderzinken
8　Presskammerhälfte
9　Presskammerhälfte
10　Knüpfapparat mit Vorratsgarn
11　Garnführung
12　Nadel
13　Garn
14　Einlassöffnung
15　Schwenkachse
16　Ballen
17　Drehpunkt Nadel
18　Gleitschiene

## Patentansprüche

1. Grossballenpresse für geschnittenes Halmgut mit einer aufklappbaren Presskammer (3), die mit einer Einlassöffnung (14) zur Zufuhr des Halmgutes versehen ist, und die durch Aufklappen eines Teils (9) der Presskammer (3) eine Auslassöffnung für den fertigen Ballen (16) bildet, mit einer Aufnahmevorrichtung (5) für das geschnittene Halmgut, mit einer Fördertrommel (6), deren Länge der Breite des zu formenden Ballens entspricht, zwischen Aufnahmevorrichtung (5) und Einlassöffnung (14), und mit einer Bindevorrichtung (10) für den Ballen (16), die aus mehreren oberhalb der Einlassöffnung (14) angeordneten Knüpfapparaten (10) mit Garnvorratsrollen besteht, denen jeweils eine schwenkbare Nadel (12) und eine bewegliche Garnführung (11) zugeordnet sind, wobei die Garnführungen Schlitze in der Presskammer (3) durchsetzen, dadurch gekennzeichnet, dass die Garnführung (11) mit dem aufklappbaren Teil (9) der Presskammer (3) verbunden ist und durch dessen Schwenkbewegung beim Öffnen in Richtung zum Knüpfapparat (10) hin verschwenkbar ist und dass die Presskammer (3) in ihrer Gesamtheit um eine quer zur Fahrtrichtung (A) der Presse liegende, waagrechte Achse (X) kippbar angeordnet ist.

2. Grossballenpresse nach Anspruch 1, dadurch gekennzeichnet, dass zur zusätzlichen Verdichtung des Ballenkerns die Garnführung (11) von einer Feder beaufschlagt ist.

3. Grossballenpresse nach einem der vorhergehenden Ansprüche, dadurch gekennzeichnet, dass die Garnführung (11) innerhalb der Presskammer (3) schwenkbar angeordnet ist.

## Claims

1. Large-scale baling press for cut stalks, with a swing-open press chamber (3) which is provided with an inlet orifice (14) for feeding the stalks and which forms an outlet orifice for the finished bale (16) when a part (9) of the press chamber (3) is swung open, with a pick-up device (5) for the cut stalks, with a conveying drum (6), the length of which corresponds to the width of the bale to be formed, between the pick-up device (5) and inlet orifice (14), and with a binding device (10) for the bale (16), which consists of several knotting units (10) which are arranged above the inlet orifice (14) and have yarn supply rolls, and to each of which is assigned a pivotable needle (12) and a movable yarn guide (11), the yarn guides passing through slits in the press chamber (3), characterized in that the yarn guide (11) is connected to the swing-open part (9) of the press chamber (3) and can be pivoted towards the knotting unit (10) when the said part (9) executes a pivoting movement during opening, and in that the press chamber (3) as a whole is arranged so that it can be tilted about a horizontal axis (X) lying transversely relative to the direction of travel (A) of the press.

2. Large-scale baling press according to Claim 1, characterized in that, to compress the bale core additionally, the yarn guide (11) is stressed by a spring.

3. Large-scale baling press according to one of the preceding claims, characterized in that the yarn guide (11) is arranged pivotably within the press chamber (3).

## Revendications

1. Presse pour grandes balles pour fourrage coupé, avec une chambre de pressage (3) relevable dotée d'une ouverture d'admission (14) pour le chargement du fourrage, constituant une ouverture de sortie de la balle liée (16) par relevage d'une partie (9) de la chambre de pressage (3), avec un dispositif de ramassage (5) du fourrage coupé, avec un ameneur rotatif (6) dont la longueur correspond à la largeur de la balle à fabriquer, ameneur placé entre le dispositif de ramassage (5) et l'ouverture d'admission (14), avec un lieur (10) de la balle (16), lieur composé de plusieurs mécanismes noueurs (10) et des rouleaux de réserve de ficelle placés au-dessus de l'ouverture d'admission (14), auxquels sont affectés à chaque fois une aiguille pivotante (12) et un guide-ficelle (11) mobile, lesdits guides passant par des fentes de la chambre de pressage (3), presse pour grandes balles caractérisée en ce que le guide-ficelle (11) est lié à la partie relevable (9) de la chambre de pressage (3) et peut être basculé vers le mécanisme noueur (10) lors du mouvement d'ouverture de ladite partie (9), et en ce que l'ensemble de la chambre de pressage (3) bascule autour d'un axe horizontal (X) transversal au sens de déplacement (A) de la presse.

2. Presse pour grandes balles selon la revendication 1, caractérisée en ce que, pour assurer une compression supérieure du cœur de la balle, le guide-ficelle (11) est actionné par un ressort.

3. Presse pour grandes balles selon l'une des revendications 1 et 2, caractérisée en ce que le guide-ficelle (11) oscille à l'intérieur de la chambre de pressage (3).

Fig. 1

0 088 240

Fig. 2

0 088 240

Fig. 3

0 088 240

Fig. 4

9

15

8

11

10

16

1500

12

13

0 088 240

Fig. 5

Fig. 6

0 088 240

Fig. 7

19

0 088 240

Fig. 8

0 088 240

Fig. 9

Fig. 10

Fig. 11

Fig. 12

29

0 088 240

Fig. 13

Fig 14

Fig. 15

0 088 240